# EUROPEAN PATENT APPLICATION

(11) **EP 1 243 469 A2**
(43) Date of publication of application: **25.09.2002**
(21) Application number: 02005295.7
(22) Date of filing: 12.03.2002
(51) Int. Cl.: B60Q 1/52

(54) **Device for signaling a stopped vehicle involved in an accident**

(30) Priority: 20.03.2001 IT PD010069
(71) Applicant: Pasqualin, Giorgio Giuliano, 35127 Padova (IT)
(72) Inventor: Pasqualin, Giorgio Giuliano, 35127 Padova (IT)
(74) Representative: Modiano, Guido, Dr.-Ing.

(57) **Abstract**

A device for emergency signaling of a stopped vehicle involved in an accident, comprising at least one emergency light source (11), to be arranged in a region that is visible from the outside of the vehicle, which is supplied by a dedicated power supply circuit (13) provided with at least one impact-sensitive switch (14).

## Description

The present invention relates to a device for signaling a stopped vehicle involved in an accident.

It is known that one of the main and severe problems for a car or a vehicle in general involved in a traffic accident, such as a pile-up, is damage to its lighting system, which particularly in low-visibility conditions due for example to fog, or in any case at night, makes it fully invisible to approaching vehicles.

Therefore, especially just after the accident, when there has been no time to prepare accident signaling devices, it becomes necessary to signal promptly the presence of a stopped vehicle on the road.

The aim of the present invention is to provide an emergency signaling device that allows to detect, even in low-visibility conditions, a vehicle that has stopped on the road following an accident.

Within this aim, an object of the invention is to provide a device that operates independently of the electrical system of the vehicle.

Another object is to provide a device that is activated immediately after the accident has occurred.

Another object is to provide an emergency signaling device that has a simple structure.

Another object is to provide a device to be preinstalled on new vehicles or as an auxiliary apparatus to be installed on already commercially available vehicles.

Another object is to provide a low-cost emergency signaling device.

This aim and these and other objects that will become better apparent hereinafter are achieved by a device for emergency signaling of a stopped vehicle involved in an accident, characterized in that it comprises at least one emergency light source, to be arranged in a region that is visible from the outside of the vehicle, which is supplied by its own electrical circuit provided with at least one impact-sensitive switch.

Further characteristics and advantages of the invention will become better apparent from the following detailed description of a preferred but not exclusive embodiment thereof, illustrated only by way of non-limitative example in the accompanying drawings, wherein:

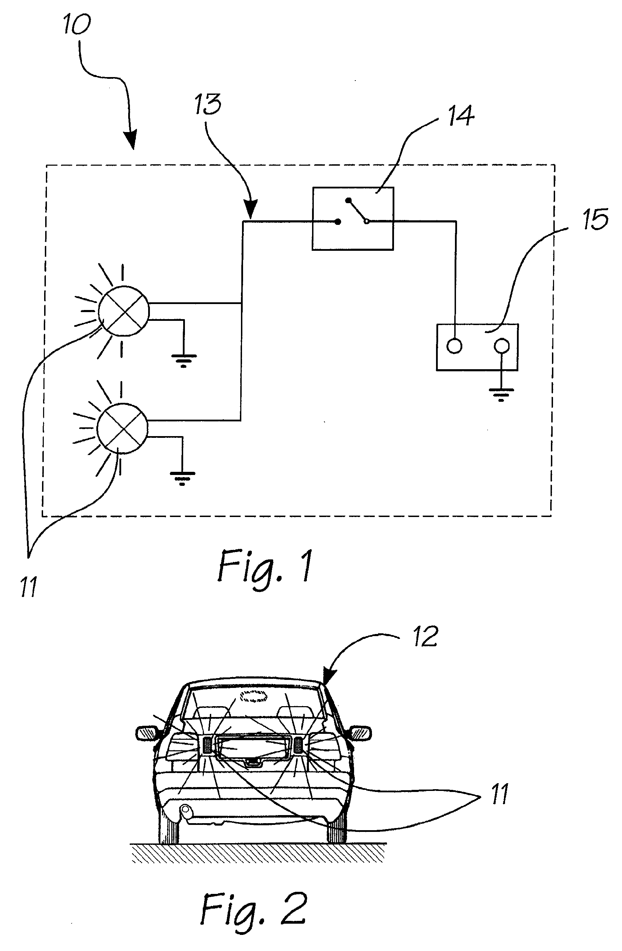

Figure 1 is a schematic view of a circuit diagram of the device according to the invention;
Figure 2 is a view of the rear portion of a vehicle with which a device according to the invention has been associated.

With particular reference to the figures, a device for emergency signaling of a stopped vehicle involved in an accident according to the invention is generally designated by the reference numeral 10.

The device 10 comprises at least one and preferably two emergency light sources 11 arranged adjacent to the rear lights of a vehicle 12.

Advantageously, the device 10 can comprise light sources 11 arranged at the front of the vehicle 12, for example adjacent to the front lights, and/or even laterally.

The light sources 11 are supplied by a dedicated electrical circuit 13 provided with an inertial switch, schematically designated by the reference numeral 14, which activates the device 10 following impact stresses to which the vehicle 12 can be subjected.

The electrical circuit 13 is powered by a rechargeable battery 15, which can be connected to the electrical system of the vehicle 12.

The device 10 can comprise a first switch available to the user, not shown in the figure, that bypasses the inertial switch 14 in order to activate the device 10 when the user deems this necessary.

Advantageously, the device 10 can comprise a second switch available to the user, which is also not shown in the figure and is meant to activate the device 10 and simultaneously deactivate the electrical system of the vehicle 12.

It is thus evident that the device 10 is preinstalled on vehicles, fitting the light sources 11 directly on the rear part.

Advantageously, however, the device 10 can be conceived as an auxiliary apparatus to be installed in already commercially available vehicles.

In this case, the device 10 comprises one or more light sources, which contain both the power supply batteries and the inertial switches.

In this case there is a cable for constantly recharging the batteries, to be connected to the electrical circuit of the vehicle, and there is a drained-battery indicator.

The auxiliary apparatus must be arranged at the rear window of the vehicle, so that it is clearly visible from outside, to the rear of the vehicle.

As regards operation, when a vehicle provided with a device 10 is involved in collision, the inertial switch 14 activates the electrical circuit 13, allowing the lighting of the light sources 11, which make the vehicle 12 immediately visible, even in low-visibility conditions, to users approaching the vehicle.

Since the device 10 is supplied with an independent electrical circuit, its operation is independent of the electrical circuit of the vehicle 12, ensuring in any circumstance operation in emergencies.

It is also evident that the device can be installed on new vehicles or on vehicles that are already commercially available as an auxiliary apparatus.

The present invention is susceptible of numerous modifications and variations, all of which are within the scope of the inventive concept.

The technical details can be replaced with other technically equivalent elements.

The materials, so long as they are compatible with the contingent use, as well as the dimensions, may be any according to requirements.

The disclosures in Italian Patent Application No. PD2001A000069 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (10) for emergency signaling of a stopped vehicle involved in an accident, **characterized in that** it comprises at least one emergency light source (11), to be arranged in a region that is visible from the outside of the vehicle, which is supplied by a dedicated power supply circuit (13) provided with at least one impact-sensitive switch (14).

2. The device according to claim 1, **characterized in that** said impact-sensitive switch (14) is an inertial switch.

3. The device according to claim 1, **characterized in that** said power supply circuit (13) comprises rechargeable batteries.

4. The device according to claim 3, **characterized in that** said rechargeable batteries are connected to the electrical system of the vehicle.

5. The device according to claim 1, **characterized in that** it comprises a first power-on switch, which is available to the user and bypasses said inertial switch (14).

6. The device according to one or more of the preceding claims, **characterized in that** it comprises a second switch, which is available to the user in order to activate said device (10) and simultaneously deactivate the electrical system of the vehicle.

7. The device according to claim 1, **characterized in that** said at least one light source (11) is arranged at the rear of the vehicle.

8. The device according to claim 1, **characterized in that** said at least one light source (11) is arranged at the front of the vehicle.

9. The device according to one or more of the preceding claims, **characterized in that** it comprises two light sources (11) arranged adjacent to the rear lights of the vehicle.

10. The device according to one or more of the preceding claims, **characterized in that** it comprises light sources (11) arranged at the front and rear of the vehicle, respectively adjacent to the front and rear lights of the vehicle.

11. The device according to one or more of the preceding claims, **characterized in that** it comprises light sources (11) arranged laterally to the vehicle.

12. The device according to one or more of claims 1 to 6, **characterized in that** said emergency light source comprises internally said power supply batteries and said impact-sensitive switch (14).

13. The device according to claim 12, **characterized in that** said light source (11) is provided with a drained-battery indicator.

14. The device according to claims 12 and 13, **characterized in that** it comprises a cable for connection to the electrical system of the vehicle in order to constantly recharge said power supply batteries.
